# EUROPÄISCHE PATENTSCHRIFT

(11) **EP 2 503 306 B1**
(45) Veröffentlichungstag und Bekanntmachung des Hinweises auf die Patenterteilung: **21.11.2018**
(21) Anmeldenummer: 11181938.9
(22) Anmeldetag: 20.09.2011
(51) Int. Cl.: G01F 23/00, H01H 35/42, G01M 3/04, G01F 15/06, G01F 23/16

(54) **Flüssigkeitsmelder mit batterielosem Funktaster**
Liquid detector with battery-free wireless switch
Détecteur de liquide doté d'un commutateur radio sans batterie

(30) Priorität: 21.03.2011 DE 102011005836
(43) Veröffentlichungstag der Anmeldung: 26.09.2012
(73) Patentinhaber: AFRISO-Euro-Index GmbH, 74363 Güglingen (DE)
(72) Erfinder: Fritz, Jürgen, 75031 Kleingartach (DE)
(74) Vertreter: Kohler Schmid Möbus Patentanwälte

(56) Entgegenhaltungen:
- DE-A1- 10 256 156
- GB-A- 2 463 039
- US-A- 3 671 695
- US-A- 3 936 793
- US-A- 4 631 374
- US-A- 5 463 377
- US-A1- 2002 104 566
- US-A1- 2005 024 214

## Beschreibung

Die vorliegende Erfindung betrifft einen Flüssigkeitsmelder, insbesondere einen Wassermelder.

Heutige Wassermelder bestehen aus einer Sonde zum Detektieren von Wasser und einem Gerät, welches das Sondensignal auswertet und anzeigt. Sonde und Auswertegerät sind über Kabel oder über Funk miteinander verbunden. Bei der Funkverbindung benötigt die Sonde eine Stromversorgung in Form eines Netzteils oder einer Batterie und somit immer entweder eine Kabelverbindung oder eine Batterie bzw. einen Akku. Allerdings besteht gerade bei batterie- oder akkubetriebenen Wassermeldern die Gefahr, dass ein Flüssigkeitsleck aufgrund einer nicht mehr ausreichend geladenen Batterie bzw. Akku des Wassermelders nicht gemeldet wird und dies zu großen Flüssigkeitsschäden führt.

Ein Flüssigkeitsmelder, bei welchem ein quellkörperbetätigte elektrische Schalter verwendet wird, ist z.B. aus Dokument US 5 463 377 A oder aus Dokument US 3 936 793 A bekannt.

Demgegenüber ist es die Aufgabe der vorliegenden Erfindung, einen mobilen, d.h. kabellosen Flüssigkeitsmelder anzugeben, der stets ausreichend Energie zum Aussenden eines Funksignals aufweist.

Diese Aufgabe wird erfindungsgemäß gelöst durch einen Flüssigkeitsmelder, insbesondere Wasser- oder Ölmelder, mit einem Quellkörper, der bei Kontakt mit einer Flüssigkeit aufquillt, mit einer quellkörperbetätigten Schnappfeder, die durch den aufgequollenen Quellkörper aus einem vorgespannten metastabilen Deformationszustand in ihren stabilen Endzustand zurückspringt, und mit einem batterielosen Funktaster, der die beim Rücksprung in den stabilen Endzustand freigesetzte Deformationsenergie der Schnappfeder in ein Funksignal umsetzt.

Erfindungsgemäß wird ein Flüssigkeitsmelder mit einer quellkörperbetätigten Schnappfeder, z.B. in Form eines so genannten Knackfroschs, in Kombination mit einem batterielosen Funktaster vorgeschlagen. Zum Scharfstellen des Flüssigkeitsmelders wird die Schnappfeder manuell in ihren vorgespannten metastabilen Deformationszustand gebracht, also der Knackfrosch gedrückt. Kommt der Quellkörper mit Flüssigkeit in Berührung, quillt der Quellkörper auf und lenkt dabei die Schnappfeder aus, die dadurch aus dem vorgespannten metastabilen Deformationszustand in den stabilen Endzustand zurückspringt und durch diese Bewegung den batterielosen Funktaster betätigt. Die dabei freiwerdende Deformationsenergie bzw. -bewegung der Schnappfeder wird vom batterielosen Funktaster in ein Funksignal umsetzt, das an eine Überwachungszentrale übertragen wird. Bei solchen batterielosen Funktastern, wie sie beispielsweise von der Fa. EnOcean GmbH (enocean.com/de*)* angeboten werden, wird die Energie für die Funksignalübertragung allein aus der Betätigungskraft auf den Funktaster gewonnen. Soll der mit Flüssigkeit in Kontakt gekommene Flüssigkeitsmelder dann wieder aktiviert werden, wird die Schnappfeder bzw. der Knackfrosch erneut manuell vorgespannt (gedrückt).

Die Erfindung betrifft in einem weiteren Aspekt auch ein Überwachungssystem mit mindestens einem wie oben ausgebildeten Flüssigkeitsmelder und mit mindestens einem Funkempfänger zum Empfangen des Funksignals des bzw. der Flüssigkeitsmelder. Mehreren Flüssigkeitsmeldern können jeweils unterschiedliche Funkadressen zugeordnet sein.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a, 1b: den erfindungsgemäßen Flüssigkeitsmelder mit einer quellkörperbetätigten Schnappfeder in einem vorgespannten metastabilen Deformationszustand (Fig. 1a) und in ihrem stabilen Endzustand (Fig. 1b); und
- Fig. 2: ein Überwachungssystem mit mehreren Flüssigkeitsmeldern.

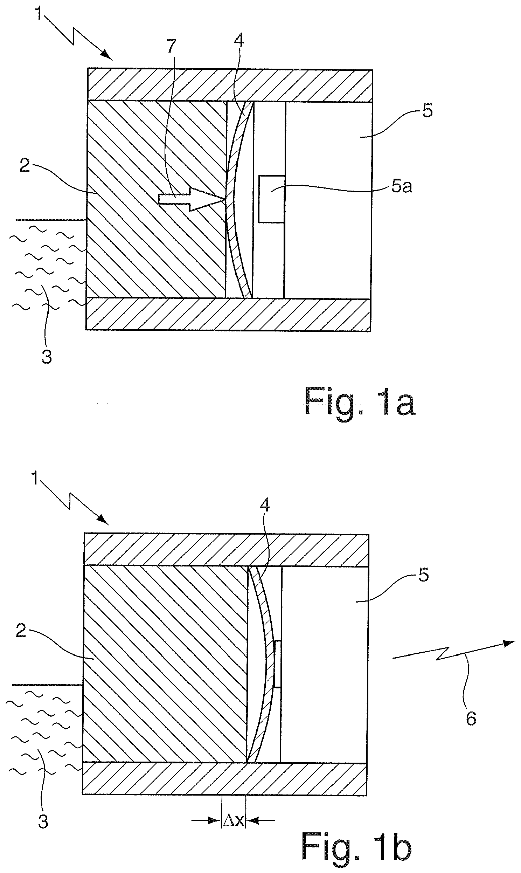

Der in **Fig. 1** gezeigte Flüssigkeitsmelder **1** dient zum Detektieren von Flüssigkeit, wie z.B. Wasser oder Öl, und zum Aussenden eines entsprechenden Funksignals.

Der Flüssigkeitsmelder 1 umfasst einen Quellkörper **2,** der bei Kontakt mit einer Flüssigkeit **3** aufquillt, eine quellkörperbetätigte Schnappfeder ("Knackfrosch") **4,** die durch den aufgequollenen Quellkörper 2 aus dem in Fig. 1a gezeigten vorgespannten metastabilen Deformationszustand in ihren in Fig. 1b gezeigten stabilen Endzustand zurückspringt, sowie einen batterielosen Funktaster **5,** der die beim Rücksprung in den stabilen Endzustand freigesetzte Deformationsenergie der Schnappfeder 4 in ein Funksignal **6** umsetzt. Die Energie für die Signalübertragung wird allein aus der von der Schnappfeder 4 ausgeübten Betätigungskraft auf die Taste **5a** des Funktasters 5 gewonnen.

Zum Scharfstellen des Flüssigkeitsmelders 1 wird die Schnappfeder 4 manuell in den vorgespannten metastabilen Deformationszustand gebracht, d.h. der Knackfrosch wird gedrückt. Kommt der Quellkörper 2 mit Flüssigkeit in Berührung, quillt der Quellkörper 2 in Längsrichtung **7** um ein Maß **Δx** auf und lenkt dabei die Schnappfeder 4 soweit mit aus, dass sie aus dem vorgespannten metastabilen Deformationszustand in den stabilen Endzustand zurückspringt und dadurch die Taste 5a des batterielosen Funktasters 5 betätigt. Die dabei freiwerdende Deformationsenergie der Schnappfeder 3 wird vom batterielosen Funktaster 5 in das Funksignal 6 umsetzt, welches als Alarmsignal an einen Funkempfänger eines Überwachungssystems übertragen wird. Soll der mit der Flüssigkeit 3 in Kontakt gekommene Flüssigkeitsmelder 1 dann wieder aktiviert werden, wird die Schnappfeder 3 bzw. der Knackfrosch erneut manuell vorgespannt (gedrückt).

Der Quellkörper 2 besteht im Falle eines Wassermelders aus so genannten Kartonquellscheiben und im Falle eines Ölmelders aus einem EPDM-Material, das auf seine Empfindlichkeit gegenüber Heizöl, optimiert wurde.

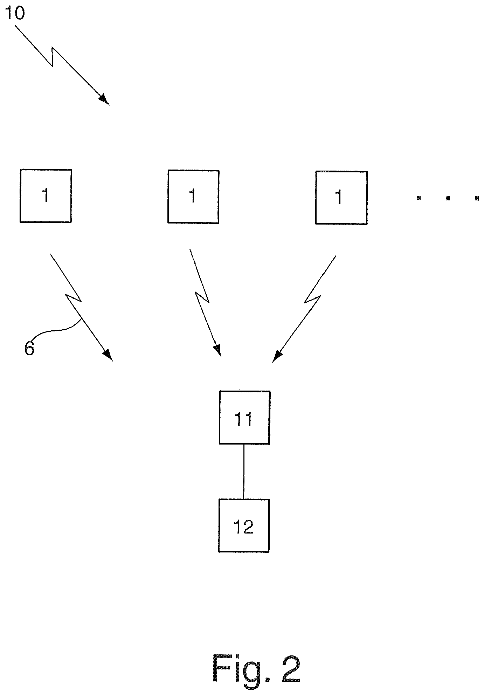

Das in **Fig. 2** gezeigte Überwachungssystem **10** umfasst mehrere Flüssigkeitsmelder 1, einen Funkempfänger **11** zum Empfangen der Funksignale 6 der mehreren Flüssigkeitsmelder 1 und eine Überwachungszentrale **12** zum Auswerten der vom Funkempfänger 11 empfangenen Funksignale 6. Den Flüssigkeitsmeldern 1 sind jeweils unterschiedliche Funkadressen zugeordnet.

## Patentansprüche

1. Flüssigkeitsmelder (1), insbesondere Wasser- oder Ölmelder,
mit einem Quellkörper (2), der bei Kontakt mit einer Flüssigkeit (3) aufquillt, und mit einer quellkörperbetätigten Schnappfeder (4), die durch den aufgequollenen Quellkörper (2) aus einem Ausgangszustand in einen Endzustand deformiert wird,
**dadurch gekennzeichnet,**
**dass** der Ausgangszustand der Schnappfeder (4) ein vorgespannter metastabiler Deformationszustand und der Endzustand der Schnappfeder (4) ein stabiler Endzustand ist, in den die durch den aufgequollenen Quellkörper (2) betätigte Schnappfeder (4) aus ihrem metastabilen Ausgangszustand zurückspringt, und
**dass** ein batterieloser Funktaster (5) vorgesehen ist, der die beim Rücksprung in den stabilen Endzustand freigesetzte Deformationsenergie der Schnappfeder (4) in ein Funksignal (6) umsetzt.

2. Flüssigkeitsmelder nach Anspruch 1, **dadurch gekennzeichnet, dass** die Schnappfeder (4) durch einen Knackfrosch gebildet ist.

3. Überwachungssystem (10) mit mindestens einem Flüssigkeitsmelder (1) nach Anspruch 1 oder 2 und mit einem mindestens einem Funkempfänger (11) zum Empfangen des Funksignals (6) des mindestens einen Flüssigkeitsmelders (1).

4. Überwachungssystem nach Anspruch 3, **dadurch gekennzeichnet, dass** mehrere Flüssigkeitsmelder (1) vorgesehen sind, denen jeweils unterschiedliche Funkadressen zugeordnet sind.

## Claims

1. Liquid detector (1), in particular a water or oil detector, comprising an expansion member (2) which expands upon contact with a liquid (3),
and a snap spring (4) which is actuated by the expansion member and is deformed by the expanded expansion member (2) from an initial state into a final state,
**characterized in that**
the initial state of the snap spring (4) is a pretensioned metastable deformation state and the final state of the snap spring (4) is a stable final state into which the snap spring (4) actuated by the expanded expansion member (2) returns from its metastable initial state, and
that a battery-free radio switch (5) is provided which converts the deformation energy of the snap spring (4) released during return into the stable final state into a radio signal (6).

2. Liquid detector according to claim 1, **characterized in that** the snap spring (4) is formed by a clicker.

3. Monitoring system (10) comprising at least one liquid detector (1) according to claim 1 or 2 and comprising at least one radio receiver (11) for receiving the radio signal (6) of the at least one liquid detector (1).

4. Monitoring system according to claim 3, **characterized in that** a plurality of liquid detectors (1) are provided to each of which different radio addresses are assigned.

## Revendications

1. Détecteur de liquide (1), en particulier détecteur d'eau ou d'huile,
comportant un corps gonflant (2) qui gonfle au contact d'un liquide (3) et
un ressort à action brusque (4) actionné par le corps gonflant, qui est déformé d'un état initial à un état final par le corps gonflant (2),
**caractérisé en ce**
**que** l'état initial du ressort à action brusque (4) est un état de déformation métastable précontraint et l'état final du ressort à action brusque (4) est un état final stable dans lequel le ressort à action brusque (4) actionné par le corps gonflant gonflé (2) revient à partir de son état initial métastable, et
**qu'**un bouton-poussoir radio sans pile (5) est prévu, qui convertit l'énergie de déformation du ressort à action brusque (4) libérée lors du retour à l'état final stable en un signal radio (6).

2. Détecteur de liquide selon la revendication 1, **caractérisé en ce que** le ressort à action brusque (4) est formé par un ressort du type grenouille à déclic.

3. Système de surveillance (10) comprenant au moins un détecteur de liquide (1) selon la revendication 1 ou 2 et au moins un récepteur radio (11) pour recevoir le signal radio (6) dudit au moins un détecteur de liquide (1).

4. Système de surveillance selon la revendication 3, **caractérisé en ce qu'**il est prévu plusieurs détecteurs de liquide (1) auxquels sont attribuées des adresses radio différentes.
